# FASCICULE DE BREVET EUROPEEN

(11) **EP 0 410 861 B1**
(45) Date de publication et mention de la délivrance du brevet: **02.10.1996**
(21) Numéro de dépôt: 90402107.8
(22) Date de dépôt: 23.07.1990
(51) Int. Cl.: G06F 11/20

(54) **Architecture de système informatique comportant deux bus**
Aufbau eines zwei Bus enthaltenden Rechnersystems
Architecture of a computer system comprising two buses

(30) Priorité: 27.07.1989 FR 8910155
(43) Date de publication de la demande: 30.01.1991
(73) Titulaire: BULL S.A., 92800 Puteaux (FR)
(72) Inventeur: Carteau, Daniel, F-75116 Paris (FR)
(74) Mandataire: Gouesmel, Daniel

(56) Documents cités:
- EP-A- 0 111 871
- EP-A- 0 117 954
- EP-A- 0 262 923
- DE-A- 3 513 542
- MICROPROCESSING AND MICROPROGRAMMING, vol. 21, no. 1-5, août 1987, pages 333-338, Amsterdam, NL; R. VOGT: "Improving the reliability of bus systems: fault isolation and fault tolerance"
- COMPUTER TECHNOLOGY REVIEW, vol. 4, no. 3, 1984, pages 35-36,38, Los Angeles, US; R. AOUIZERAT: "Shared memory devices can link PDP-11s into load-balanced clusters"
- DATABUS, juillet-août 1987, pages 14-19, Deventer, NL; "Achtergronden van de VME-bus"

## Description

La présente invention concerne une architecture de système informatique comportant deux bus. Elle est applicable à tout type d'ordinateur.

Quel que soit le type de système informatique, il existe des fonctions de base commune, sous diverses formes, à tous ces systèmes. Ces fonctions de base sont effectuées par les différents éléments structurels, matériels et logiciels, du système informatique. Pour simplifier, on supposera que ce système informatique est un ordinateur classique constitué d'une unité centrale (central processor unit, en anglais, en abrégé, CPU), encore appelé système hôte (host, en anglais), et de différents organes périphériques, que ce soit des périphériques magnétiques tels que des mémoires à disques ou dérouleurs de bandes ou des périphériques dits d'entrée/sortie permettant l'échange de données avec l'extérieur (imprimantes et différents terminaux à écran, etc ...).

L'unité centrale (le système hôte) est formée par au moins un processeur central (par plusieurs processeurs, dans ce cas le système informatique est dit multiprocesseurs) et une mémoire principale à laquelle ce processeur (ces processeurs) est relié, et un processeur d'entrée/sortie (plusieurs processeurs d'entrée/sortie) assurant le contrôle de l'échange des données entre la mémoire et les différents organes périphériques.

Le transfert physique des données entre l'unité centrale et le ou les périphériques qui lui sont associés s'effectue par l'intermédiaire d'un coupleur (de plusieurs coupleurs) qui est (sont) relié(s) d'une part au bus de sortie de l'unité centrale et d'autre part à l'organe périphérique que l'on cherche à mettre en oeuvre.

L'ensemble des éléments constitutifs fonctionnels constituant un système informatique, qu'il s'agisse des processeurs centraux ou d'entrée/sortie, des mémoires vives et mémoires mortes, des contrôleurs d'entrée/sortie ou des contrôleurs de périphériques est disposé sur un ensemble de cartes (boards, en anglais) dont les dimensions sont généralement normalisées. Toute carte est constituée d'un circuit imprimé sur lequel sont disposées une pluralité de circuits (chips, en anglais) intégrés (circuits intégrés) constituant chacune des sous-ensembles ou ensembles fonctionnels parfaitement déterminés fabriqués en grande série par les différents constructeurs de composants électroniques tels que Texas Instruments, Motorola, Intel, ... .

Ces cartes sont reliées généralement à un même bus de type parallèle qui assure les communications entre les différents processeurs, le transport des données entre les différentes cartes et l'alimentation électrique de celles-ci. A cet effet, les cartes sont munies de connecteurs de type mâle (généralement deux connecteurs) permettant de les relier physiquement au bus qui comporte lui-même des connecteurs femelles correspondants disposés en un certain nombre d'emplacements de connexion déterminés (un emplacement de connexion est connu sous le terme anglo-saxon de slot).

Parmi les bus les plus couramment utilisés dans la pratique actuelle, on trouve le bus communément appelé Multibus II (marque de la Société Intel). Ce bus est le résultat d'un travail de groupe comprenant 17 sociétés américaines et européennes en plus d'Intel. Parmi ces sociétés, on relève AMD, Tektronics, Hewlet-Packard, ICL, Siemens, ainsi que la Compagnie demanderesse et bien d'autres. Ce Multibus II présente de bonnes performances ainsi qu'une grande souplesse et sécurité d'emploi.

Comme son nom l'indique, l'architecture d'un Multibus II est structurée autour de plusieurs bus et comprend un bus principal et des bus secondaires. Seul le bus principal est normalisé suivant la norme IEEE 1296 (IEEE est le sigle de l'Institute of Electrical and Electronic Engineers) et concerne l'invention.

Ce bus est appelé PSB (ce qui signifie Parallel System Bus). Il est destiné à l'usage général et est conçu pour opérer dans un environnement multiprocesseurs avec des fonctions d'arbitrage, d'identification des cartes, etc ... ;

Le PSB est construit autour du format des cartes dit "DOUBLE EUROPE" (233 x 220 mm) avec deux connecteurs appelés P₁ et P₂ dont l'un correspond au bus PSB et dont l'autre est libre.

Les deux connecteurs sont des modèles à 96 broches (3 rangées parallèles de 32 broches) conformes à des normes définies par l'International Electromechanical Commission, sous la référence 603-2IEC096, qu'il s'agisse des connecteurs mâles présents sur chacune des cartes ou femelles disposés sur le bus lui-même. Ces connecteurs 96 points sont encore définis par la norme DIN 41612.

Le bus système PSB assure les communications interprocesseurs et les mouvements de données. Il accepte n'importe quel type de processeur disponible aujourd'hui sur le marché. Il a les caractéristiques suivantes :
- Un débit de 40 Mégaoctets par seconde en mode rafale (burst mode) obtenu grâce à une fréquence d'horloge de 10 MHz pour une largeur de bus de 32 bits (soit 4 octets).
- Un fonctionnement de type synchrone qui annule l'influence des signaux parasites lorsqu'il est inactif ;
- Possibilité de travailler avec des processeurs de 8, 16 ou de 32 bits ou de transférer des données sur 8, 16, 24 ou 32 bits.

Le Multibus II est un bus de type fond de panier. Il est donc formé d'un circuit imprimé qui supporte des connecteurs, la norme IEEE 1296 définissant chacun des conducteurs qui le compose, les dimensions des cartes qui sont connectées sur le bus, l'espacement entre celles-ci, leur mécanique, etc ... . Par ailleurs, le nombre de cartes connectables sur le Multibus II est limité à 20 car un trop grand nombre de cartes limite ses performances du fait d'une dissipation plus grande d'énergie, de l'existence de capacités et inductances parasites, etc ... . Par ailleurs la longueur du bus est limitée à 40 cm.

La structure physique d'une architecture de système informatique multiprocesseurs se présente donc sous la forme d'un panier porte-cartes comportant une pluralité de cartes logiques (20 maximum pour un panier comportant un Multibus II), de forme sensiblement parallélépipédique. Le fond de panier a une forme sensiblement rectangulaire. Le fond de panier porte le Multibus qui a la forme d'un circuit imprimé orienté cuivre qui comporte une pluralité d'emplacements de connexion (20) sur lesquels sont di sposés des connecteurs femelles à 96 broches . Les faces du panier parallèles à la longueur de ce dernier et perpendiculaires au fond de panier comportent chacune une rangée de guide-cartes parallèles à l'intérieur desquelles peuvent coulisser les cartes afin d'être connectées par l'intermédiaire des connecteurs mâles aux connecteurs femelles disposées sur le fond de panier.

On connaît déjà une telle structure physique qui est décrite dans la demande de brevet EP - A - 117 954. Elle comprend une pluralité de cartes électroniques destinées à être connectées à un premier et à un second bus de type parallèle permettant les communications de données et d'énergie électrique entre les cartes, chacun des premier et second bus possédant une pluralité m de moyens de connexion spécifiques de la nature du bus, destinés à raccorder les conducteurs composant chacun de ces bus avec chacune des cartes (CDI1, CGI1), le premier et le second bus (PSBAI, PSBBI) présentant entre eux une zone de recouvrement (ZC) totale de la pluralité de moyens de connexion du premier et du second bus, et étant physiquement parallèle l'un à l'autre.

Lorsque les concepteurs d'une architecture de système informatique élaborent les plans d'ensembles électroniques constituant ces systèmes (c'est-à-dire l'ensemble des cartes qui les constituent), ils ont, parmi leurs objectifs d'avoir la meilleure disponibilité possible pour ce système informatique et également d'obtenir de bonnes performances.

On rappelle que pour un système informatique, l'indisponibilité est le temps pendant lequel le système où le sous-système est indisponible pour le client qui l'utilise (pour cause de panne, pour cause d'entretien, pour cause de révision générale du système). Il est clair que la disponibilité se définit par opposition à l'indisponibilité.

Par ailleurs, on appelle performance d'un système déterminé le nombre de transactions que l'on peut effectuer pendant l'unité de temps. Ainsi, par exemple, pour une mémoire à disques, la performance s'établit en mesurant le nombre d'opérations de lecture et d'écriture qu'on peut faire pendant l'unité de temps (secondes, microsecondes, ...). Lorsque l'on cherche à obtenir une disponibilité et des performances élevées, on est conduit à se poser le problème du doublage du bus, c'est-à-dire de réaliser une architecture de système informatique comportant deux ensembles électroniques identiques construit chacun autour d'un même bus par exemple un bus de type Multibus II. La structure physique d'un tel système est alors constituée par deux paniers porte-cartes identiques. La nouvelle architecture ainsi obtenue composée de deux ensembles identiques apporte ainsi la redondance souhaitée, permettant d'accroître disponibilité et performance par rapport à la structure comportant un seul ensemble.

Pour traiter en interne les cas de pannes partielles (ce sont les pannes pouvant survenir à tout ou partie des éléments physiques constituant les ensembles électroniques ci-dessus définis) sans que ce problème ne soit traité par le logiciel de l'unité centrale du système informatique mais le soit par un logiciel contenu dans l'un des éléments physiques précités, on établit alors une liaison physique entre chacun des deux ensembles électroniques qui constituent l'architecture du système informatique.

La liaison entre les deux ensembles est la plus performante possible, lorsqu'elle devient de fait un troisième bus sur lequel des éléments communs aux deux ensembles viennent se connecter. L'inconvénient de ce système est qu'il comporte au moins deux cartes supplémentaires pour établir la liaison entre les deux ensembles, à savoir une première carte de liaison connectée au premier bus du premier ensemble, et une seconde carte connectée au second bus du second ensemble. Par ailleurs, si le troisième bus tombe en panne, en quelque endroit que ce soit, on perd tout l'avantage obtenu : on n'a donc plus un véritable double accès soit au premier ensemble, soit au second ensemble, ceci étant vu dans le sens de la disponibilité.

Un autre inconvénient qu'il faut mentionner également est la nécessité de relier les deux paniers comportant les deux ensembles électroniques par un même câble ce qui coûte relativement cher et diminue la performance.

La présente invention permet de remédier à ces inconvénients en disposant deux ensembles distincts dans un même fond de panier, en évitant des liaisons spécifiques par câble entre les deux ensembles, et en ayant de ce fait une disponibilité très importante équivalente à deux ensembles distincts, tout en ayant des éléments communs aux deux ensembles et des accès très performants à ceux-ci.

Selon l'invention, la structure physique d'accueil d'une pluralité de cartes électroniques destinées à être connectées à un premier et à un second bus de type parallèle, permettant les communications de données et d'énergie électrique entre les cartes, chacun des premier et second bus possédant une pluralité m de moyens de connexion spécifiques de la nature du bus, chacun desdits moyens de connexion étant destiné à raccorder les conducteurs composant le bus avec chacune des cartes, le premier et le second bus présentant entre eux une zone de recouvrement partielle de la pluralité de moyens de connexion du premier et du second bus,
est caractérisée en ce que les deux bus sont décalés l'un par rapport à l'autre d'un nombre donné n de moyens de connexion supérieur à zéro, de telle sorte que la dite zone de recouvrement comprend un nombre (m-n) de moyens de connexion appartenant à la fois aux deux bus, l'ensemble formé par les deux bus comprenant en outre une première et une seconde zone comprenant respectivement uniquement des moyens de connexion au premier et au second bus, la structure comportant un fond de panier de forme sensiblement rectangulaire ayant un centre de symétrie O et un plan de symétrie perpendiculaire au plan du fond de panier lequel porte le premier et le second bus et comprend une première rangée de (m + n) moyens de connexion du premier bus portant des connecteurs femelles et ayant un premier axe de symétrie parallèle à la longueur du fond de panier, et une seconde rangée de (m+n) moyens de connexion du second bus portant les connecteurs femelles et ayant un second axe de symétrie parallèle au premier, où (m + n) est strictement supérieur au nombre maximum de cartes connectables sur le standard de bus considéré, les moyens de connexion des première et seconde rangées étant alignés deux à deux selon une même ligne parallèle à la largeur du fond de panier, les connecteurs de la première rangée situés dans la première moitié (seconde moitié) du panier d'un même côté du plan de symétrie étant montés symétriquement des connecteurs de la seconde rangée situés dans la seconde moitié (première moitié) du panier, de l'autre côté du plan de symétrie par rapport au centre de symétrie. D'autres caractéristiques et avantages de la présente invention apparaîtront dans la description suivante donnée à titre d'exemple non limitatif et en se référant aux dessins annexés.

Sur ces dessins :
- La figure 1 illustre de manière simplifiée la notion de disponibilité d'un système informatique ;
- La figure 2 montre un système informatique selon l'art antérieur comportant deux bus par exemple de type Multibus II et deux ensembles de cartes identiques dont chacun est connecté à un seul et même bus, la figure 2 comportant les figures 2a et 2b ;
- La figure 3 montre le schéma électrique simplifié d'un système informatique selon l'invention comportant deux bus de type Multibus II parallèles entre eux et décalés l'un par rapport à l'autre ;
- La figure 4 est une vue de dessus schématique simplifiée montrant le fond de panier de la structure physique en forme de panier qui correspond à l'architecture du système informatique selon l'invention montrée à la figure 3 ;
- La figure 5 est une vue de 3/4 en perspective écorchée montrant la structure physique en forme de panier du système informatique à deux bus selon l'invention montrée à la figure 3 ;
- La figure 6 est une vue de dessus montrant de façon simplifiée 4 connecteurs femelles disposés sur des emplacements de connexion du fond de panier correspondant au système informatique selon l'invention, disposé de part et d'autre du plan de symétrie du panier perpendiculaire à la longueur du fond de panier ;

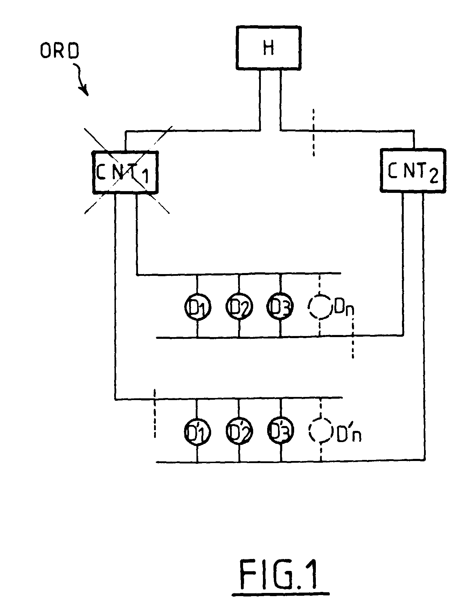

On considère la figure 1 qui permettra de mieux comprendre la notion de disponibilité (ou d'indisponibilité) d'un système informatique.

On considère tout d'abord un système informatique ORD formé du système hôte H (ce dernier étant composé d'un ou plusieurs processeurs centraux et des mémoires associées ainsi que des processeurs et contrôleurs d'entrée/sortie, voir plus haut), qui est associé à une batterie de mémoire à disques D₁, D₂, D₃, ..., Dₙ. Ces dernières sont commandées par un même contrôleur CNT₁.

Plusieurs cas d'indisponibilité sont possibles :
- Si le contrôleur CNT₁ de l'ensemble des mémoires à disque D₁ à Dₙ tombe en panne, il en résulte que aussi bien le contrôleur CNT₁ que l'ensemble des mémoires à disques associées D₁ à Dₙ sont indisponibles le temps nécessaire aux agents ou opérateurs de maintenance d'effectuer la réparation du contrôleur CNT₁. On voit donc que l'indisponibilité du seul contrôleur CNT₁ entraîne l'indisponibilité de toutes les mémoires à disque associées.
- Le contrôleur CNT₁ fonctionne, mais l'une (ou plusieurs parmi les n mémoires à disques) tombe en panne. Seule cette mémoire est indisponible. Toutefois, si le système hôte H a besoin des informations qui sont enregistrées dans la mémoire à disque indisponible (par exemple D₁), cela peut provoquer de sérieuses perturbations dans le fonctionnement du système informatique dans son ensemble.

Pour accroître la disponibilité du système informatique ORD, deux types de solutions par exemple sont alors possibles :
1/ Pour éviter que l'indisponibilité de l'une quelconque des mémoires à disque D₁ à Dₙ ne vienne perturber le fonctionnement de l'ensemble du système informatique, comme il a été indiqué ci-dessus, on constitue alors une seconde batterie de mémoires à disque D′₁ à D′ₙ, également commandée par CNT₁ identique à la batterie D₁ à Dₙ, chacune des mémoires à disque D′₁ à D′ₙ étant le miroir des mémoires à disque correspondantes D₁ à Dₙ. Cela signifie que les données enregistrées sur les mémoires à disque D′₁ sont strictement identiques aux données enregistrées dans la mémoire à disque D₁. Toutefois, il est clair que dans ce cas, si le contrôleur CNT₁ est défectueux, l'ensemble du système est indisponible.
2/ Pour avoir la disponibilité la meilleure possible, il est alors nécessaire d'améliorer la disponibilité du système décrit dans le paragraphe 1/ ci-dessus, en associant à chacune des deux batteries des mémoires à disque D₁ à Dₙ et D′₁ à D′ₙ, un contrôleur de mémoires à disque CNT₂ identique au contrôleur de mémoires à disque CNT₁.

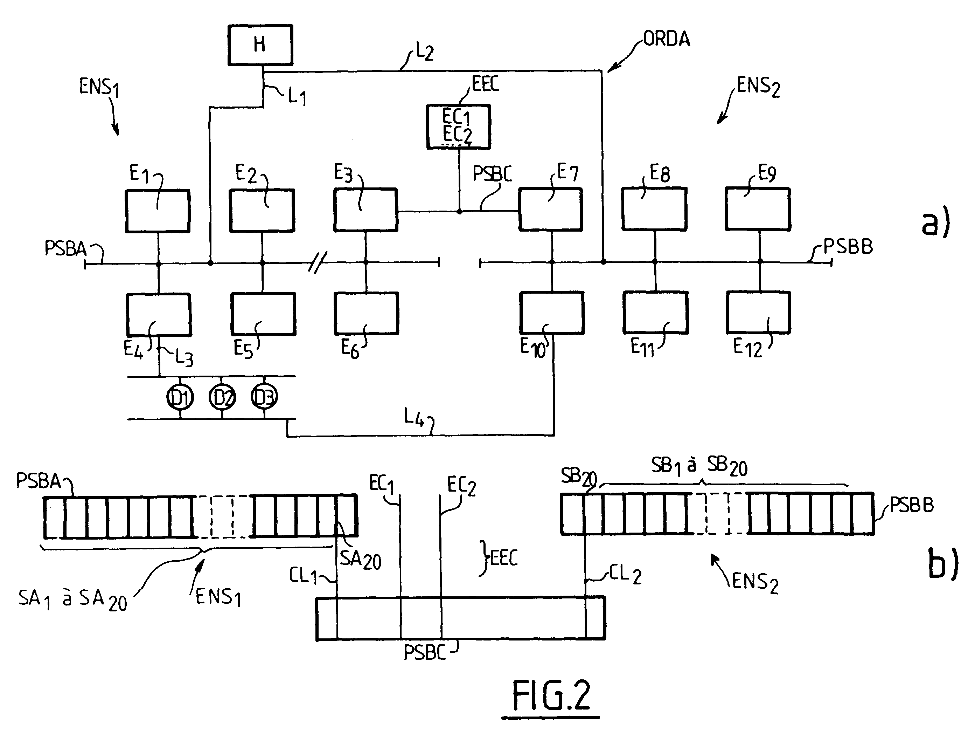

On considère les figures 2a et 2b qui montrent un système informatique ORDA selon l'Art Antérieur qui est formé d'un système hôte H et de deux ensembles identiques de cartes ENS₁ et ENS₂ et d'un ensemble EEC d'éléments communs aux deux ensembles ENS₁ et ENS₂, offrant une grande disponibilité et de bonnes performances.

Le premier ensemble ENS₁ est représenté à la figure 2a comme étant formé de 6 éléments E₁, E₂, E₃, ..., E₆ reliés à un même bus de type Multibus II, à savoir PSBA, mais il est évident qu'il peut en comprendre davantage puisque, ainsi qu'il a été dit plus haut, on peut connecter jusqu'à 20 éléments à un même Multibus II tel que PSBA.

L'ensemble ENS₂ est identique à l'ensemble ENS₁, et comprend 6 éléments E₇, E₈, ..., E₁₂ identiques respectivement aux éléments E₁ à E₆ de l'ensemble ENS₁.

Les éléments E₇ à E₁₂ sont reliés à un même bus de type Multibus II PSBB.

Afin d'améliorer la disponibilité de l'ordinateur ORDA, les deux ensembles ENS₁ et ENS₂ sont, de préférence, reliés par un ensenble EEC d'éléments communs EC₁, EC₂, etc. Ces éléments sont, de fait, reliés être eux par un même troisième bus PSBC. Ces éléments sont donc accessibles à la fois par tout élément de ENS₁ et tout élément de ENS₂. Ainsi, l'ensemble EEC est connecté, à la figure 2a, respectivement à l'élément E₃ de ENS₁ et E₇ de ENS₂.

Le système hôte H est relié par exemple à l'ensemble ENS₁ par l'intermédiaire d'une liaison L₁ et par la liaison L₂ à l'ensemble ENS₂. (Ces liaisons L₁ et L₂ sont par exemple connectées aux bus PSBA et PSBB).

On considère la figure 2b qui représente la structure physique simplifiée des trois bus PSBA, PSBB et PSBC.

On sait que les bus PSBA et PSBB de type Multibus II définis par la norme IEEE 1296, sont de type fond de panier, ces derniers comportant 20 emplacements de connexion, à savoir SA₁ à SA₂₀ pour le bus PSBA et SB₁ à SB₂₀ pour le bus PSBB. Ces différents emplacements de connexion comportent des connecteurs femelles normalisés DIN41612 (voir plus haut) sur lesquels viennent s'embrocher les connecteurs mâles des différentes cartes constituant les éléments tels que E₁ à E₆ ou E₇ à E₁₂. Les connecteurs mâles et femelles normalisés DIN41612 comportent ainsi qu'il a été dit plus haut 96 broches.

La figure 2b montre également comment sont reliés les deux ensembles ENS₁ et ENS₂. Cette liaison comporte une carte de liaison CL₁ connectée au bus PSBA à l'emplacement de connexion SA₂₀ et une carte CL₂ connectée à l'emplacement de connexion SB₂₀ du bus PSBB. CL₁ et CL₂ portent respectivement, par exemple, les éléments E₃ et E₇.

Les deux cartes de connexion CL₁ et CL₂ sont elle-mêmes reliées entre elles par l'intermédiaire du troisième bus PSBC, auxquels sont connectés les éléments communs EC₁ et EC₂, etc... de l'ensemble d'éléments communs EEC. Ce même troisième bus PSBC est soit un bus de type quelconque, soit un bus de type Multibus II également.

Dans le cas où l'ensemble d'éléments communs est vide, c'est-à-dire qu'il n'y a pas d'éléments communs proprement dits, les deux ensembles ENS₁ et ENS₂ sont simplement reliés par l'intermédiaire des cartes CL₁ et CL₂ reliées elles-mêmes entre elles par l'intermédiaire d'une liaison telle qu'un câble par exemple. Dans la pratique, lorsque le nombre d'éléments communs est relativement faible, ces derniers sont reliés entre eux deux à deux par une liaison par câble et le troisième bus est de fait constitué par un ensemble de câbles reliant entre eux deux à deux les éléments communs.

La structure de l'ordinateur ORDA montrée à la figure 2a, permet d'obtenir une forte disponibilité, ainsi que l'exemple suivant le montre.

On suppose par exemple que l'élément E₄ est un contrôleur de mémoires à disque D₁, D₂, D₃, le contrôleur étant relié à la batterie de mémoires à disque D₁, D₂, D₃, ..., par la liaison L₃. L'homologue du contrôleur E₄ dans l'ensemble ENS₂ est l'élément E₁₀ qui est relié à la batterie de mémoires à disque D₁, D₂, D₃, par l'intermédiaire de la liaison L₄.

Si le contrôleur E₄ est défectueux et tombe en panne, l'accès (de la part du système hôte) aux données contenues dans la batterie de mémoires à disque D₁ à D₃ peut s'effectuer de deux façons, à savoir d'une part par le chemin constitué par la liaison L₁, le bus PSBA, l'élément E₃, le bus PSBC et les éléments communs EEC, l'élément E₇ et le contrôleur E₁₀, d'autre part par le chemin constitué par la liaison L₂, et le contrôleur E₁₀ suivi de la liaison L₄. On voit donc que deux solutions se présentent pour remédier à une panne éventuelle de l'un quelconque des éléments E₁ à E₆ de l'ensemble ENS₁ (il en serait de même évidemment pour tout élément de l'ensemble ENS₂). On voit que la probabilité d'indisponibilité de l'ordinateur ORDA, du fait de la panne de l'un quelconque des éléments constituant l'un des deux ensembles ENS₁ et ENS₂ est extrêmement faible.

Par ailleurs, lorsque le contrôleur E₄ devient défectueux, c'est un logiciel de commande contenu dans l'une quelconque des cartes de l'un des ensembles ENS₁ ou ENS₂ qui met en oeuvre le processus permettant d'avoir accès aux données de la batterie D₁ à D₃ par l'un ou l'autre des chemins indiqués ci-dessus pour accomplir cette tâche. On n'a donc pas besoin de faire appel à un logiciel contenu dans le système hôte H comme c'est le cas dans la structure de la figure 1.

Toutefois, ainsi qu'il a été dit plus haut, la structure montrée à la figure 2a présente l'inconvénient suivant.
- D'une part, les deux ensembles ENS₁ et ENS₂ sont constitués physiquement par deux paniers distincts, reliés entre eux par un troisième bus PSBC, ce qui constitue une structure relativement compliquée et coûteuse,
- Si la liaison PSBC est interrompue pour une raison quelconque, il en résulte que la disponibilité de l'ordinateur ORDA est sérieusement affectée.

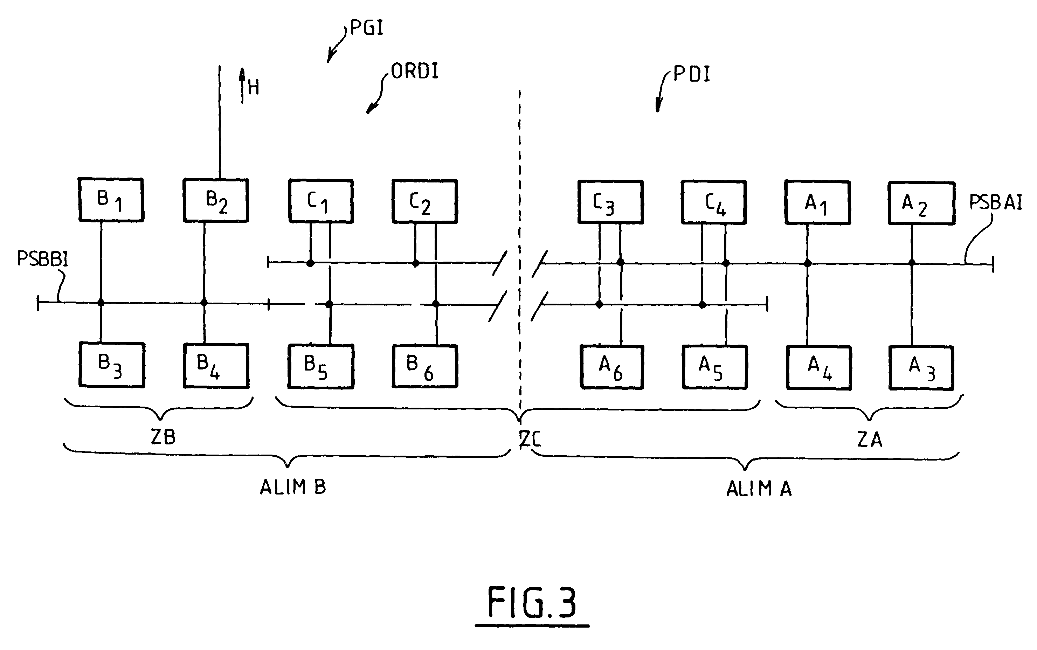

On considère désormais la figure 3 qui montre un exemple de réalisation d'une architecture système selon l'invention de conception relativement simple et moins onéreuse que celle de la figure 2, tout en assurant une disponibilité supérieure.

Le système informatique ORDI selon l'invention comprend un système hôte H identique à ceux montrés aux figures 1 et 2, un premier ensemble ENSI₁ composé d'éléments A₁ à A₆, un second ensemble ENSI₂ formé des éléments B₁ à B₆ et d'un ensemble EECI d'éléments communs C₁ à C₄. A la figure 3, H (non représenté pour simplifier) est connecté à l'élément B₂, mais il peut fort bien être connecté directement au bus PSBAI et/ou au bus PSBBI.

Les deux ensembles ENSI₁ à ENSI₂ sont, dans l'exemple de réalisation décrit ici, des ensembles identiques. Les éléments A₁ à A₆ sont respectivement identiques aux éléments correspondants B₁ à B₆. Pour des raisons évidentes de simplification de la figure 3, il n'a été représenté que 6 éléments pour les ensembles ENSI₁ et ENSI₂ et quatre éléments pour l'ensemble d'éléments communs EECI, mais il est évident que ce nombre d'éléments peut être différent et être soit inférieur soit supérieur.

Le système informatique selon l'invention ORDI comporte deux bus identiques parallèles l'un à l'autre, de préférence de type Multibus II, et décalés l'un par rapport à l'autre d'une longueur permettant la connexion de n éléments. On suppose que le nombre d'éléments connectables à un même bus PSBAI ou PSBBI est égal à m où m est dans le cas d'un Multibus II égal à 20. Les éléments A₁ à A₆ de ENSI₁ sont connectés à PSBAI et les éléments B₁ à B₆ de ENSI₂ sont connectés à PSBBI.

L'architecture ORDI comporte donc trois zones différentes, à savoir ZA, ZB, ZC.

La zone ZA et la zone ZB sont des zones correspondant au décalage entre les deux bus PSBAI et PSBBI, où les deux bus ne sont pas en regard l'un de l'autre.

La zone ZA correspond à une partie du bus PSBAI où sont connectés exclusivement des éléments de l'ensemble ENSI₁, tels que A₁ à A₄.

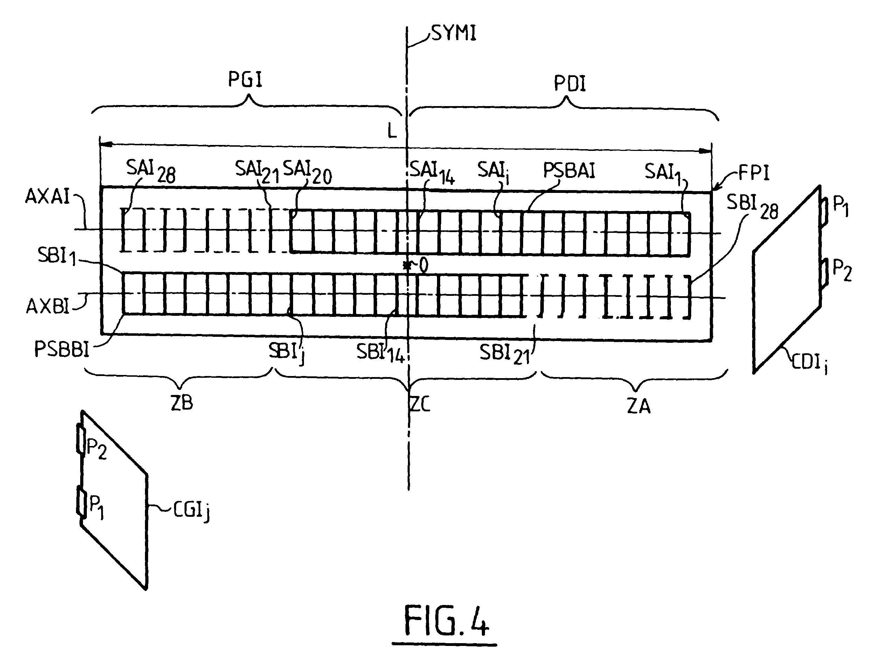

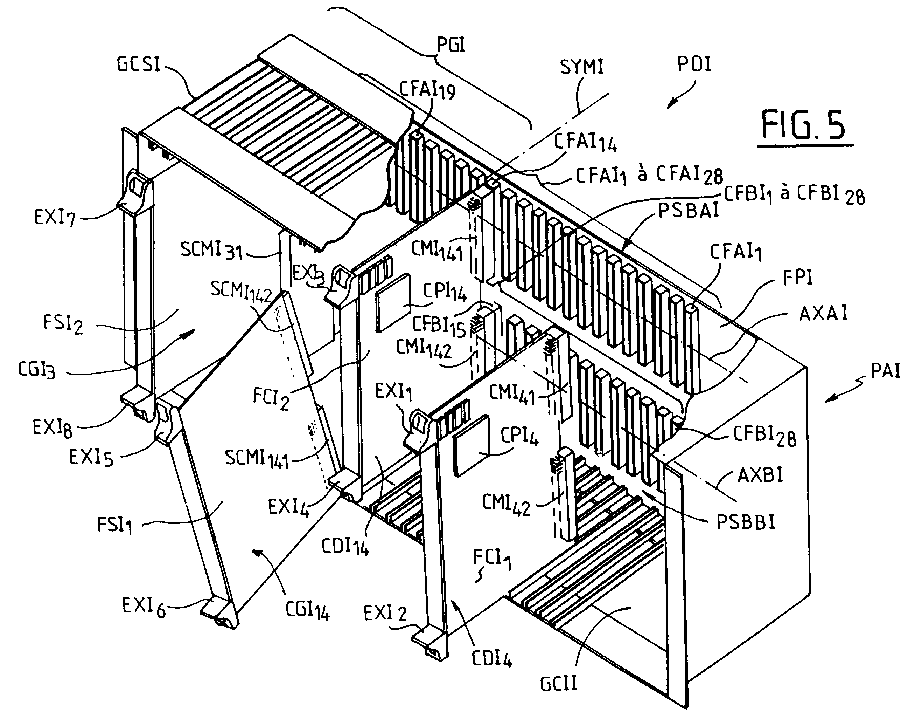

De même, la zone ZB correspond à la partie du multibus PSBBI où sont connectés exclusivement des éléments de l'ensemble ENSI₂, tels que B₁ à B₄. On a donc dans ce cas précis n égal 4, mais il est évident que ce nombre lui aussi peut être différent et inférieur ou supérieur à ce chiffre (comme c'est le cas aux figures 4 et 5). On peut même avoir n = 0.

Quant à la zone ZC, elle correspond aux parties des deux bus PSBAI et PSBBI qui sont en regard l'une de l'autre, physiquement (voir description ci-dessous en relation avec les figures 4 et 5). On y connecte des éléments communs aux deux ensembles ENSI₁ et ENSI₂, tels que C₁ à C₄, et, dans l'exemple de réalisation décrit ici en relation avec la figure 3, des éléments de l'ensemble ENSI₁ tels que A₅ et A₆ connectés au bus PSBAI et des éléments de l'ensemble ENSI₂ tels que B₅ et B₆ connectés au bus PSBBI.

De manière plus générale, la zone commune ZC comprend, soit exclusivement des éléments communs aux deux ensembles ENSI₁ et ENSI₂, soit outre des éléments communs, des éléments appartenant à l'ensemble ENSI₁ et/ou des éléments appartenant à l'ensemble ENSI₂. L'essentiel est, dans l'un comme l'autre des deux cas précédents, que les ensembles ENSI₁ et ENSI₂ restent identiques.

Dans le cas où seulement une partie des éléments des ensembles ENSI₁ et ENSI₂ est identique, le raisonnement précédent tenu pour les deux ensembles dans leur entier, s'applique intégralement aux parties identiques des éléments des ensembles. Dans ce cas, les parties non identiques sont, de préférence mais non exclusivement, connectées aux zones ZA et ZB.

On voit que la zone ZC est telle que l'on peut y connecter m - n éléments.

Ainsi qu'on peut le voir à la figure 3, on peut décomposer le système ORDI, du point de vue de l'alimentation électrique des différentes cartes constituant les différents éléments des deux ensembles ENSI₁ et ENSI₂ en une première partie, à savoir la partie droite PDI et en une seconde partie, à savoir la partie gauche PGI. Cela signifie que toutes les cartes correspondant aux éléments qui se situent dans la partie droite PDI seront alimentées en énergie électrique par une même alimentation ALIMA, alors que tous les éléments contenus dans la partie gauche PGI seront alimentés par une même alimentation en énergie électrique ALIMB. Dans le cas de l'exemple de réalisation particulier montré à la figure 3, les éléments A₁ à A₆ et les deux éléments communs C₃ et C₄ sont alimentés en énergie électrique par l'alimentation ALIMA, alors que les éléments B₁ à B₆ et les éléments communs C₁ et C₂ sont alimentés en énergie électrique par l'alimentation ALIMB.

Ces alimentations électriques sont, de préférence, indépendantes l'une de l'autre et il est évident que le nombre d'alimentations électriques peut être différent de deux et lui être supérieur.

On considère désormais la figure 4 qui montre le fond de panier FPI du panier contenant la structure physique du système informatique ORDI montré à la figure 3. On note que le système informatique est constitué par une seule et même structure physique, à savoir le panier PAI (voir figure 5) dont est seulement représenté le fond de panier FPI à la figure 4. On voit déjà apparaître la première différence de structure physique entre le système informatique de l'art antérieur montré à la figure 2 et le système informatique selon l'invention de la figure 3, à savoir que les deux ensembles ENSI₁ et ENSI₂ sont disposés dans un seul et même panier, alors que les deux ensembles équivalents du système montré à la figure 2 sont disposés dans deux paniers différents.

On peut dire que la figure 4 est une vue de dessus extrêmement simplifiée du fond de panier FPI dont les détails apparaissent de façon plus précise à la figure 5.

Le fond de panier FPI présente un plan de symétrie SYMI perpendiculaire à son plan et à sa longueur L (grande dimension). Il a une forme sensiblement rectangulaire et un centre de symétrie 0 qui, bien entendu, est le centre du rectangle. Sur cette même figure 4, on a donc représenté la trace de ce plan de symétrie SYMI sur le plan du fond de panier FPI.

De part et d'autre du plan de symétrie SYMI, on trouve respectivement la partie droite PDI et la partie gauche PGI du système ORDI respectivement alimentées par les alimentations ALIMA et ALIMB.

Le bus de type Multibus II PSBAI est disposé dans la partie supérieure de la figure 4, alors que le bus de type Multibus II PSBBI est disposé dans la partie inférieure du fond de panier FPI montré à la figure 4.

Dans l'exemple de réalisation montré à la figure 4, on a supposé que n égal 8. Par conséquent, les zones ZA et ZB pourront se voir connecter 8 cartes représentant des éléments du système informatique ORDI. La partie commune ZC pourra donc comprendre, étant donné que m égale 20, 12 éléments qui lui seront connectés.

Le fond de panier FPI comprend dans sa partie supérieure et de droite à gauche (celle qui est en haut de la figure 4) 28 emplacements de connexion SAI₁ à SAI₂₈, alors que sa partie inférieure de gauche à droite comprend également 28 emplacements de connexion SBI₁ à SBI₂₈. La nature des connecteurs femelles disposés sur ces emplacements de connexion sera précisée ci-dessous. Les connecteurs correspondant aux emplacements de connexion SAI₁ à SAI₂₈ sont désignés par CFAI₁ à CFAI₂₈, alors que les connecteurs disposés sur les emplacements de connexion SBI₁ à SBI₂₈ sont désignés par CFBI₁ à CFBI₂₈.

Les 20 premiers connecteurs CFAI₁ à CFAI₂₀ disposés aux emplacements de connexion SAI₁ à SAI₂₀ sont reliés électriquement au bus PSBAI, alors que les 20 premiers connecteurs CFBI₁ à CFBI₂₀ disposés aux emplacements de connexion SBI₁ à SBI₂₀ sont connectés électriquement au bus PSBBI.

Les emplacements de connexion SAI₂₁ à SAI₂₈ d'une part et SBI₂₁ à SBI₂₈ d'autre part sont munis de connecteurs qui ne sont pas reliés électriquement aux bus PSBAI d'une part et PSBBI d'autre part. La raison en est que, suivant la norme IEEE1296, le nombre de connecteurs reliés électriquement à un bus de type Multibus II ne peut excéder le nombre de 20.

Sur la partie droite PDI du fond de panier FPI on peut connecter 14 cartes CDIᵢ avec i compris entre 1 et 14. Bien entendu, ainsi qu'on peut mieux le voir à la figure 5, toute carte CDIᵢ connectée dans la partie droite PDI du fond de panier FPI est perpendiculaire au plan du fond de panier. Toute carte CDIᵢ comprend un premier connecteur mâle P₁ et un second connecteur mâle P₂ qui sont destinés à se connecter respectivement à des connecteurs femelles de même type situés sur les emplacements SAIᵢ et SBIⱼ. Le connecteur P₁ est défini par la norme DIN41612 mentionnée ci-dessus, alors que le connecteur P₂ est libre, c'est-à-dire que son choix est laissé à la libre disposition du constructeur. Par suite, on voit que tous les connecteurs femelles CFAI₁ à CFAI₁₄ (le nombre total d'emplacements de connexion étant de 28, les deux parties droite et gauche PDI et PGI comprennent chacune 14 emplacements de connexion) sont munis des connecteurs femelles de type P₁ définis par la norme indiquée ci-dessus. On voit donc également que les emplacements de connexion SBI₁₄ à SBI₂₈ de la partie droite PDI disposés dans la partie inférieure du fond de panier FPI sont munis de connecteurs femelles CFBI₁₄ à CFBI₂₈ de type P₂.

Les cartes CGIⱼ qui sont connectées dans la partie gauche PGI du fond de panier PFI perpendiculairement à celui-ci, sont montées de telle sorte que le connecteur disposé dans la partie inférieure de la carte, est de type P₁ alors que le connecteur disposé dans la partie supérieure de cette même carte est de type P₂. Toutefois, les cartes CGIⱼ sont montées à l'envers des cartes CDIᵢ. Par suite, le connecteur CFAI₁₄ disposé à l'emplacement de connexion SAI₁₄ est symétrique par rapport au centre de symétrie 0 du connecteur CFBI₁₄ disposé à l'emplacement de connexion SBI₁₄ et il en est de même de proche en proche pour les autres connecteurs CFAI₁₃ à CFAI₁ et CFBI₁₃ à CFBI₁. Autrement dit, le connecteur CFAI₁ est symétrique par rapport au point 0 du connecteur CFBI₁.

Il en est bien entendu de même pour les connecteurs CFAI₁₅ (de type P2) et du connecteur CFBI₁₅. Ils sont symétriques l'un de l'autre par rapport au centre de symétrie 0 et ainsi de suite de proche en proche pour les connecteurs CFAI₁₆ à CFAI₂₈ symétriques par rapport au point 0 des connecteurs CFBI₁₆ à CFBI₂₈.

Il convient de remarquer que dans une forme de réalisation préférée de l'invention, le connecteur P₂ est identique au connecteur P₁ défini par la norme DIN41612 précitée.

A la figure 5, on peut voir les connecteurs CFAI₁ à CFAI₁₉ (les autres connecteurs CFAI₂₀ à CFAI₂₈ sont masqués par la face supérieure du panier PAI) permettant de connecter les cartes CDIᵢ, CGIⱼ au bus PSBAI. De même, on peut voir les connecteurs CFBI₂₈ à CFBI₁₅ du bus PSBBI (les autres connecteurs CFBI₁₄ à CFBI₁ étant masqués par d'autres éléments à la figure 5).

L'ensemble des connecteurs femelles CFAI₁ à CFAI₂₈ a le même axe de symétrie AXAI parallèle à la longueur du fond de panier FPI. Par abus de langage, on dit que les connecteurs CFAI₁ à CFAI₂₈ sont alignés sur le même axe AXAI. L'ensemble CFBI₁ à CFBI₂₈ a même axe de symétrie AXBI parallèle à AXAI (figures 4 et 5). On dit également que les connecteurs CFBI₁ à CFBI₂₈ sont alignés sur le même axe AXBI.

Par ailleurs, chacun des connecteurs CFAI₁ à CFBI₂₈, CFBI₁ à CFBI₂₈ a un axe de symétrie parallèle à la largeur du fond de panier FPI (et donc perpendiculaire à AXAI et AXBI), appelé axe de symétrie vertical, par abus de langage. Tout connecteur de l'ensemble CFAI₁ à CFAI₂₈ et tout connecteur correspondant de l'ensemble CFBI₁ à CFBI₂₈ ont même axe de symétrie vertical. Ainsi, en est-il des connecteurs CFAI₁ et CFBI₂₈, CFAI₂ et CFBI₂₇, etc ... . Il est évident que cette disposition relative des connecteurs de chacun des deux ensembles est indispensable pour permettre une connexion correcte des cartes CDIᵢ et CGIⱼ à l'intérieur du panier PAI.

Le panier PAI est muni d'un guide-cartes inférieur GCII (en fait, la face inférieure du panier) et d'un guide-cartes supérieur GCSI (en fait, la partie supérieure du panier) parallèles entre eux et perpendiculaires au fond de panier FPI, leur plan étant parallèle à la longueur du fond de panier. L'un et l'autre de ces guide-cartes sont munis de rails perpendiculaires au plan du fond de panier à l'intérieur desquels peuvent coulisser des cartes de type CDIᵢ et CGIⱼ de manière à être introduite à l'intérieur du panier puis d'être connectées aux différents connecteurs CFBI₁ à CFBI₂₈ et CFAI₁ à CFAI₂₈. Cette façon d'introduire les cartes est parfaitement connue et il n'est pas nécessaire de la décrire davantage.

On a fait figurer à la figure 5 deux cartes de type CDIᵢ à savoir les cartes CDI₄ et CDI₁₄ ainsi que deux cartes de type CGIⱼ, à savoir les cartes CGI₁₄ et CGI₃.

La carte CDI₄ est vue du côté comprenant certains composants intégrés. L'un de ceux-ci, à savoir le composant CPI₄ est montré à la figure 5 disposé sur la carte CDI₄ alors que le composant CPI₁₄ est montré disposé sur la carte CDI₁₄.

La carte CDI₄ est munie du connecteur mâle CMI₄₁ de type P₁ et du connecteur CMI₄₂ de type P₂ (en fait, identique à P₁ dans l'exemple de réalisation préférée de l'invention), alors que la carte CDI₁₄ est munie des connecteurs mâles CMI₁₄₁ et CMI₁₄₂ respectivement de type P₁ et P₂.

La carte CGI₁₄ étant montée à l'envers des cartes de type CDIᵢ, telles que CDI₄ et CDI₁₄, par rapport au plan de symétrie SYMI est donc vue du côté opposé à celui contenant les composants c'est-à-dire du côté soudure.

La carte CGI₁₄ comprend le connecteur SCMI₁₄₂ de type P₂, situé dans la partie supérieure de la carte et le connecteur SCMI₁₄₁ situé dans la partie inférieure.

De même, la carte CGI₃ est montrée avec son connecteur inférieur SCMI₃₁.

Le connecteur SCMI₁₄₁ est symétrique du connecteur CMI₁₄₁ de la carte CDI₁₄ par rapport au centre de symétrie 0 du fond de panier FPI. De même, le connecteur SCMI₁₄₂ est symétrique par rapport à ce même point 0 du connecteur CMI₁₄₂ de la carte CDI₁₄.

Chacune des cartes montrées à la figure 5 est munie d'extracteurs sur lesquels un opérateur peut exercer des pression manuel les de haut en bas et de bas en haut de manière à introduire ou retirer les cartes du panier PAI.

Ainsi, la carte CDI₄ est montrée avec ses deux extracteurs EXI₁ et EXI₂, la carte CDI₁₄ avec ses extracteurs EXI₃ et EXI₄, la carte CGI₁₄ avec ses deux extracteurs EXI₅ et EXI₆ et enfin la carte CGI₃ avec ses deux extracteurs EXI₇ et EXI₈.

La carte CDI₄ est montrée partiellement introduite à l'intérieur du panier PAI. La carte CDI₁₄ est montrée complètement introduite à l'intérieur du panier et connectée au connecteur CFAI₁₄ et CFBI₁₅, la carte CGI₁₄ est montrée à l'extérieur du panier PAI, alors que la carte CGI₁ est montrée partiellement introduite à l'intérieur de ce panier.

On voit que la structure de l'architecture selon l'invention permet de connecter davantage de cartes dans un fond de panier tel que FDI, que dans un fond de panier classique utilisant un même bus, par exemple un bus de type PSB de Multibus II.

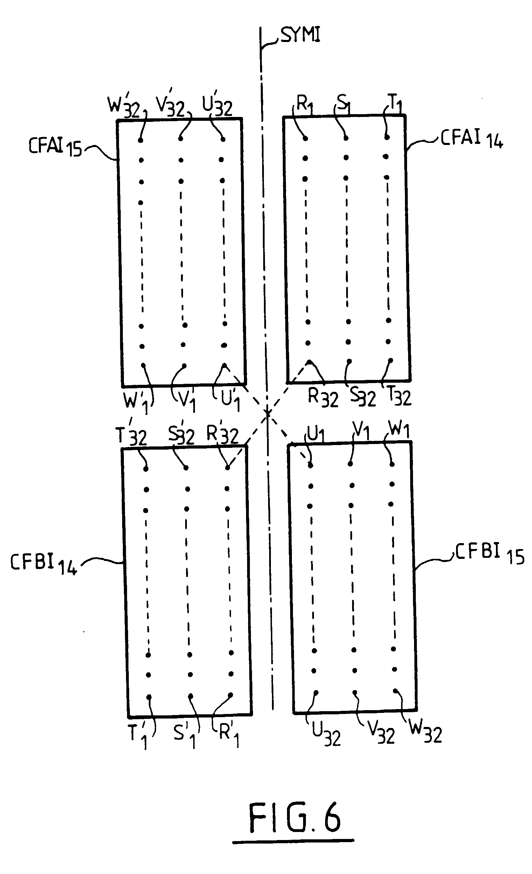

On se reporte à la figure 6 qui montre vus de dessus les connecteurs femelles des deux bus PSBAI et PSBBI les plus proches du plan de symétrie SYMI. Ces connecteurs sont les connecteurs CFAI₁₄ et CFAI₁₅ sur la partie supérieure de la figure et les connecteurs CFBI₁₄ et CFBI₁₅ dans la partie inférieure de celle-ci. Ainsi qu'il a été dit plus haut, les deux connecteurs CFAI₁₄ et CFBI₁₄ sont symétriques l'un de l'autre par rapport au centre de symétrie 0 du fond de panier PAI. De même, les deux connecteurs CFAI₁₅ et CFBI₁₅ sont symétriques l'un de l'autre par rapport à ce même centre de symétrie 0.

Ainsi, le connecteur CFAI₁₄ comprend 96 broches en trois rangées parallèles, à savoir R₁ à R₃₂, S₁ à S₃₂, T₁ à T₃₂ de gauche à droite et de haut en bas de la figure, alors que le connecteur CFBI₁₄ comprend trois rangées de 32 broches, à savoir R′₁ à R′₃₂, S′₁ à S′₃₂ et T′₁ à T′₃₂ de droite à gauche et de bas en haut.

Il en est de même pour les connecteurs CFBI₁₅ et CFAI₁₅. Le connecteur CFBI₁₅ est muni de trois rangées de 32 broches U₁ à U₃₂, V₁ à V₃₂ et W₁ à W₃₂, de gauche à droite et de haut en bas, alors que le connecteur CFAI₁₅ est muni de trois rangées parallèles de 32 broches, U′₁ à U′₃₂, V′₁ à V′₃₂, W′₁ à W′₃₂ de droite à gauche et de bas en haut à la figure 6.

La disposition relative des cartes CDIᵢ et CGIⱼ fait qu'il est impossible d'insérer une carte dans le mauvais sens. On ne peut donc insérer une carte CDIᵢ dans la partie gauche DGI et une carte CGIⱼ dans la partie droite PDI. Ceci est dû à la disposition des connecteurs sur les cartes. En effet, si l'on regarde le fond de panier (de la gauche vers la droite à la figure 5) on voit que les connecteurs sont placés à droite des cartes CDIᵢ et à gauche des cartes CGIᵢ. L'insertion d'une carte CGIⱼ dans la partie droite PDI aurait donc pour résultat que les connecteurs de celle-ci buteraient sur les connecteurs d'une carte CDIᵢ et qu'on ne pourrait insérer la carte plus profondément dans le panier, ce qui rendrait impossible la connexion.

Les avantages de l'architecture du système ORDI montré aux figures 4 à 6 sont les suivants :
- Obtention d'une disponibilité très importante équivalente à deux ensembles distincts en alimentant simplement les deux parties droite et gauche PDI et PGI à partir de deux alimentations indépendantes ALIMA et ALIMB,
- Structure physique permettant de supporter les éléments communs aux deux ensembles,
- accès aux éléments communs très performants (les performance du bus de type Multibus II),
- Cette invention peut s'appliquer à n'importe quel type bus de type standard ou non à condition que ces bus soient définis sur un seul connecteur, le second étant libre,
- Les cartes des zones ZA et ZB, ainsi que de la zone ZC peuvent être de type tout à fait standard au niveau de leur connecteur P₁,
- Cette architecture permet d'incorporer deux ensembles distincts ENSI₁ et ENSI₂ dans un même fond de panier PAI en évitant des liaisons spécifiques par câble entre les cartes qui de toute façon coûteraient beaucoup plus cher avec des performances moindres.

## Revendications

1. Structure physique d'accueil d'une pluralité de cartes (CDI1, CGI1), électroniques destinées à être connectées à un premier et à un second bus de type parallèle (PSBAI, PSBBI), permettant les communications de données et d'énergie électrique entre les cartes, chacun des premier et second bus possédant une pluralité m de moyens de connexion spécifiques de la nature du bus, chacun desdits moyens de connexion étant destiné à raccorder les conducteurs composant le bus avec une des cartes (CDI1, CGI1), le premier et le second bus (PSBAI, PSBBI) présentant entre eux une zone de recouvrement (ZC) partielle de la pluralité de moyens de connexion du premier et du second bus,
caractérisée en ce que les deux bus (PSBAI, PSBBI) sont décalés l'un par rapport à l'autre d'un nombre donné n de moyens de connexion supérieur à zéro, de telle sorte que la dite zone de recouvrement comprend un nombre (m-n) de moyens de connexion appartenant à la fois aux deux bus, l'ensemble formé par les deux bus comprenant en outre une première et une seconde zone (ZA, ZB) comprenant respectivement uniquement des moyens de connexion au premier (PSBAI) et au second bus (PSBBI),
la structure comportant un fond de panier (FPI) de forme sensiblement rectangulaire ayant un centre de symétrie O et un plan de symétrie (SYM1) perpendiculaire au plan du fond de panier (FPI), lequel porte le premier et le second bus (PSBAI et PSBBI) et comprend une première rangée de (m + n) moyens de connexion (SAl1 à SAI28) du premier bus portant des connecteurs femelles (CFAI1 à CFAI28) et ayant un premier axe de symétrie parallèle à la longueur du fond de panier, et une seconde rangée de (m+n) moyens de connexion (SBI1 à SBI28) du second bus portant les connecteurs femelles (CFBI1 à CFBI28) et ayant un second axe de symétrie parallèle au premier, où (m + n) est strictement supérieur au nombre maximum de cartes connectables sur le standard de bus considéré, les moyens de connexion des première et seconde rangées étant alignés deux à deux selon une même ligne parallèle à la largeur du fond de panier, les connecteurs de la première rangée situés dans la première moitié (seconde moitié) du panier d'un même côté du plan de symétrie (SYMI) étant montés symétriquement des connecteurs de la seconde rangée situés dans la seconde moitié (première moitié) du panier (PAI), de l'autre côté du plan de symétrie, par rapport au centre de symétrie.

2. Structure selon les revendications 1, caractérisée en ce que au moins l'un des bus est de type Multibus Il, les connecteurs correspondants étant des connecteurs 96 broches, en trois rangées parallèles de 32.

## Patentansprüche

1. Physische Struktur für die Aufnahme mehrerer elektronischer Karten (CDI1, CGI1), die dazu bestimmt sind, mit einem ersten und mit einem zweiten Bus des parallelen Typs (PSBAI, PSBBI) verbunden zu werden, welche den Austausch von Daten und von elektrische Energie zwischen den Karten ermöglichen, wobei sowohl der erste als auch der zweite Bus eine Mehrzahl m von für die Art des Busses spezifischen Verbindungsmitteln besitzt, wobei jedes der Verbindungsmittel dazu bestimmt ist, die den Bus bildenden Leiter mit einer der Karten (CDI1, CGI1) zu verbinden, wobei der erste und der zweite Bus (PSBAI, PSBBI) eine Zone einer teilweisen gegenseitigen Überlappung (ZC) der mehreren Verbindungsmittel des ersten bzw. des zweiten Busses aufweisen,
dadurch gekennzeichnet, daß die zwei Busse (PSBAI, PSBBI) zueinander um eine gegebene Anzahl n von Verbindungsmitteln die größer als Null ist, versetzt sind, derart, daß die genannte Überlappungszone eine Anzahl (m - n) von Verbindungsmitteln enthält, die gleichzeitig zu den zwei Bussen gehören, wobei die durch die zwei Busse gebildete Gesamtheit außerdem eine erste und eine zweite Zone (ZA, ZB) enthält, die ausschließlich Verbindungsmittel für den ersten Bus (PSBAI) bzw. für den zweiten Bus (PSBBI) umfassen,
wobei die Struktur einen Verdrahtungsrahmenboden (FPI) mit im wesentlichen rechtwinkliger Form mit einem Symmetriezentrum O und einer Symmetrieebene (SYMI), die zur Ebene des Verdrahtungsrahmenbodens (FPI) senkrecht ist, enthält, der den ersten und zweiten Bus (PSBAI) und (PSBBI) trägt und eine erste Reihe von (m + n) Verbindungsmitteln (SAI1 bis SAI28) des ersten Busses, die Buchsenverbinder (CFAI1 bis CFAI28) tragen und eine zur Längsrichtung des Verdrahtungsrahmenbodens parallele erste Symmetrieachse besitzen, sowie eine zweite Reihe von (m + n) Verbindungsmitteln (SBI1 bis SBI28) des zweiten Busses enthält, die die Buchsenverbinder (CFBI1 bis CFBI28) tragen und eine zur ersten parallele zweite Symmetrieachse besitzen, wobei (m + n) streng größer als die maximale Anzahl von Karten ist, die mit dem betrachteten Bus standardmäßig verbunden werden können, wobei die Verbindungsmittel der ersten und der zweiten Reihe paarweise längs derselben Linie, die zur Breitenrichtung des Verdrahtungsrahmenbodens parallel ist, aufeinander ausgerichtet sind, wobei die Verbinder der ersten Reihe, die sich in der ersten Hälfte (zweiten Hälfte) des Verdrahtungsrahmens auf derselben Seite der Symmetrieebene (SYMI) befinden, in bezug auf das Symmetriezentrum symmetrisch zu den Verbindern der zweiten Reihe angebracht sind, welche sich in der zweiten Hälfte (ersten Hälfte) des Verdrahtungsrahmens (PAI) auf der anderen Seite der Symmetrieebene befinden.

2. Struktur nach Anspruch 1, dadurch gekennzeichnet, daß wenigstens einer der Busse vom Typ Multibus II ist, wobei die entsprechenden Verbinder Verbinder mit 96 Stiften sind, die in drei parallelen Reihen zu 32 angeordnet sind.

## Claims

1. A physical structure for accepting a plurality of electronic cards (CDI1, CGI1) intended to be connected to a first and a second parallel-type bus (PSBAI, PSBBI), permitting the communication of data and electric power between the cards, each of the first and second buses having a plurality m of connection means specific to the nature of the bus, each of said connection means being intended to connect the conductors making up the bus to one of the cards (CDI1, CGI1), the first and the second bus (PSBAI, PSBBI) having between them a partial area of overlap (ZC) of the plurality of means for connecting the first and the second bus,
characterised in that the two buses (PSBAI, PSBBI) are offset in relation to one another by a given number n of connection means that is greater than zero, such that said area of overlap comprises a number (m-n) of connection means belonging at the same time to both buses, the assembly formed by the two buses further comprising a first and a second area (ZA, ZB) comprising respectively only connection means to the first (PSBAI) and to the second bus (PSBBI),
the structure comprising a backplane (FPI) substantially rectangular in shape having a centre of symmetry 0 and a plane of symmetry (SYM1) perpendicular to the plane of the backplane (FPI), which carries the first and second bus (PSBAI and PSBBI) and comprises a first row of (m + n) means (SAI1 to SAI28) for connecting the first bus carrying female connectors (CFAI1 to CFAI28) and having a first axis of symmetry parallel to the length of the backplane, and a second row of (m + n) means (SBI1 to SBI28) for connecting the second bus carrying female connectors (CFBI1 to CFBI28) and having a second axis of symmetry parallel to the first one, where (m + n) is strictly greater than the maximum number of cards that can be connected to the standard of bus in question, the means for connecting the first and second rows being aligned in pairs along the same line parallel to the width of the backplane, the connectors of the first row situated in the first half (second half of the backplane on the same side of the plane of symmetry (SYMI) being mounted symmetrically to the connectors of the second row situated in the second half (first half) of the backplane (PAI), on the other side of the plane of symmetry, relative to the centre of symmetry.

2. A structure according to Claims 1, characterised in that at least one of the buses is of the Multibus 11 type, the corresponding connectors being connectors with 96 pins, in three parallel rows of 32.
